# EUROPÄISCHE PATENTSCHRIFT

(11) **EP 1 023 806 B1**
(45) Veröffentlichungstag und Bekanntmachung des Hinweises auf die Patenterteilung: **02.01.2002**
(21) Anmeldenummer: 98954287.3
(22) Anmeldetag: 26.09.1998
(51) Int. Cl.: H04N 7/16

(54) **VERFAHREN UND VORRICHTUNG ZUR WEITERLEITUNG VON BESTIMMTEN DATEN, INSBESONDERE EMPFANGSRECHTEN IN EINEM PAY-TV-ENDGERÄT**
METHOD AND DEVICE FOR RELAYING SPECIFIC DATA, ESPECIALLY RECEIVING RIGHTS, TO A PAY TELEVISION TERMINAL
PROCEDE ET DISPOSITIF POUR TRANSMETTRE DES DONNEES PARTICULIERES, NOTAMMENT DES DROITS DE RECEPTION DANS UN TERMINAL DE TELEVISION PAYANTE

(30) Priorität: 17.10.1997 DE 19745969
(43) Veröffentlichungstag der Anmeldung: 02.08.2000
(73) Patentinhaber: Deutsche Telekom AG, 53113 Bonn (DE)
(72) Erfinder: SCHWENK, Jörg, D-91239 Henfenfeld (DE); HEUSER, Stefan, D-64289 Darmstadt (DE); SCHAAF, Christoph, D-64291 Darmstadt (DE); FINGERHOLZ, Joachim, D-64295 Darmstadt (DE)
(74) Vertreter: Gleiss & Grosse
(86) Internationale Anmeldenummer: EP9806139
(87) Internationale Veröffentlichungsnummer: WO9921361

(56) Entgegenhaltungen:
- WO-A-93/07715
- GB-A- 2 261 580

## Beschreibung

Die Erfindung betrifft ein Verfahren und eine Vorrichtung zur Weiterleitung von bestimmten Daten, insbesondere Empfangsrechten in einem Pay-TV-Endgerät, die von einem Sender ausgehend über ein Übertragungsmedium dem Pay-TV-Endgerät übertragen werden, unter Verwendung von mobilen Datenträgern, insbesondere von Chipkarten.

Es ist bekannt, daß Pay-TV-Systeme sogenannte Conditional Access-Systeme verwenden, um sicherzustellen, daß Pay-TV-Programme nur von den dazu berechtigten Kunden empfangen werden können. Dies geschieht durch Verschlüsselung der Programminhalte, durch Speicherung von Empfangsrechten in einem Sicherheitsmodul des Endgeräts und durch Hinzufügen von Empfangsbedingungen zum eigentlichen Programminhalt.

Endgeräte zum Empfang eines Pay-TV-Programmes sind meist Set-Top-Boxen oder Dekoder. Es sind aber auch andere Endgeräte möglich, zum Beispiel PC-Karten oder PCMCIA-Module, oder das Endgerät kann auch in einen Fernseher integriert sein. Als Sicherheitsmodule werden heute meist Chipkarten verwendet, die nicht fest mit dem Endgerät verbunden sind, sondern auch aus diesem entfernt werden können.

Die Programminhalte werden verschlüsselt, indem die Programmdaten von einem Verschlüsselungsalgorithmus wie zum Beispiel dem DVB Common Scrambling Algorithmus oder mit dem DES Algorithmus verschlüsselt und im Pay-TV-Endgerät wieder entschlüsselt werden.

Die Empfangsbedingungen werden einem Programm in Form sogenannter Entitlement Control Messages (ECM) hinzugefügt, die mit dem Programminhalt übertragen werden. Diese ECMs sind fest mit einem Programminhalt assoziiert und ermöglichen es, die verschlüsselten Programminhalte wieder zu entschlüsseln, damit der Kunde Bild und Ton in gewohnter Weise nutzen kann.

Die Empfangsrechte werden in Form sogenannter Entitlement Management Messages (EMM) übertragen. Die Programminhalte, die Empfangsbedingungen und die Empfangsrechte werden im gleichen Übertragungsmedium (Kabel, Satellit, terrestrischer Rundfunk usw.) übertragen. Die Empfangsrechte sind jedoch nicht mit dem Programminhalt verknüpft, sondern mit einer logischen Adresse des Endgeräts des Kunden beziehungsweise mit der des Sicherheitsmoduls.

Das Grundprinzip der Adressierung in Pay-TV-Systemen besteht darin, alle Empfangsrechte eines Kunden auf dessen persönlichen Sicherheitsmodul zu speichern. Dadurch wird es einem Kunden ermöglicht, daß die von ihm abonnierten oder gekauften Pay-TV-Programme auch über ein anderes Endgerät zu sehen sind (zum Beispiel auf einer Reise). Das Endgerät selbst enthält daher keine Adresse.

Da die Empfangsrechte immer an ein Sicherheitsmodul, meist in Form einer Chipkarte, adressiert sind, filtert das Pay-TV-Endgerät aus dem Strom der empfangenen Empfangsrechte nur diejenigen heraus, die an die aktuelle Chipkarte, die gerade in kommunikativer Verbindung mit dem Endgerät steht, adressiert sind. Zusätzlich notwendige Filterkriterien erhält das Pay-TV-Endgerät jeweils von der aktuellen Chipkarte. Dies hat zur Folge, daß ein Kunde nur dann neue Empfangsrechte empfangen kann, wenn seine Chipkarte in kommunikativer Verbindung mit einem Pay-TV-Endgerät steht. Pay-TV-Kunden sind daher dazu angehalten, ihre Chipkarte ständig im Pay-TV-Endgerät zu lassen. Da der Programmanbieter aber auch mit einem Fehlverhalten der Kunden rechnen muß, muß er die Empfangsrechte über einen langen Zeitraum wiederholt senden, was bei großen Kundenzahlen eine enorme Datenkapazität erfordert.

Mit diesem Konzept ist es unmöglich, daß mehrere Kunden mit ihren individuellen Chipkarten auf ein Pay-TV-Endgerät zugreifen. Jeder Kunde muß daher sein eigenes Endgerät besitzen, damit sichergestellt ist, daß er seine Empfangsrechte auch erhält.

Aus der WO 93/07715 A1 ist ein Pay-TV-Endgerät bekannt, welches einen Kartenleser, einen Mikroprozessor und einen Speicher umfaßt, in dem benutzerspezifische Anforderungen an das Pay-TV-Endgerät über eine Chipkarte und den Kartenleser eingelesen werden können. Sobald die Chipkarte in den Kartenleser eingeschoben wird, werden von der Chipkarte die Daten heruntergelesen und in dem Speicher abgelegt.

Der Erfindung liegt daher die Aufgabe zugrunde, eine Lösung zu entwickeln, die die vorstehenden Nachteile nicht mehr aufweist.

Diese Aufgabe wird durch ein Verfahren mit den Merkmalen des Anspruchs 1 und durch eine Vorrichtung mit den Merkmalen des Anspruchs 9 gelöst.

Die Erfindung zeichnet sich dadurch aus, daß das Pay-TV-Endgerät bestimmte Daten, insbesondere die Empfangsrechte zwischenspeichert und daß dann, nachdem ein bestimmter mobiler Datenträger, insbesondere eine Chipkarte, in kommunikativer Verbindung mit dem Pay-TV-Endgerät steht, die zu diesem mobilen Datenträger zugehörigen Empfangsrechte auf diesen weitergeleitet und gespeichert werden. Es ist dazu notwendig, daß das Pay-TV-Endgerät mittels einer Liste eine bestimmte Anzahl der Chipkartennummern, mitsamt chipkarten-spezifischer Filterinformationen speichert, mit denen es zusammenarbeiten soll. Wird eine Chipkarte, die noch nie in kommunikativer Verbindung mit dem Pay-TV-Endgerät stand, in das Pay-TV-Endgerät erstmals eingebracht, so wird die Nummer der Chipkarte in dem Pay-TV-Endgerät gespeichert. Damit "weiß" das Pay-TV-Endgerät, welche Empfangsrechte es aus dem Datenstrom aller gesendeten Empfangsrechte ausfiltern muß, um diese in der Liste abspeichern zu können.

Eine weitere vorteilhafte Ausgestaltung der Erfindung ergibt sich daraus, daß die Länge der Liste und/oder die genaue Zusammensetzung der Liste variabel oder fest vorgegeben wird. Damit besteht die Möglichkeit, je nach den technischen Möglichkeiten des Pay-TV-Endgeräts einen Speicher des Pay-TV-Endgeräts einerseits für die Liste und andererseits für andere, hier nicht weiter erläuterte Zwecke zu konfigurieren. Da die Speicherkapazität des Pay-TV-

Endgeräts nicht unbegrenzt ist, muß die Liste auf eine bestimmte Größe dimensioniert werden, so daß nur eine bestimmte Anzahl an Chipkartennummern im Pay-TV-Endgerät in der Liste abgespeichert werden können.

Es ist jedoch auch möglich, daß die Liste automatisch vom Pay-TV-Endgerät nach festen Regeln generiert wird.

In einer weiteren Ausgestaltung der Erfindung ist vorgesehen, daß die Liste manuell vom Kunden eingegeben wird. Dazu ist es notwendig, daß der Kunde die Nummern der Chipkarte selbstständig in das Pay-TV-Endgerät einprogrammiert. Es ist jedoch auch denkbar, daß die Liste über das Medium in das Pay-TV-Endgerät übertragen wird. In diesem Fall werden vom Betreiber des Systems über den Sendeweg die Chipkartennummern an das Pay-TV-Endgerät des Kunden übermittelt; was natürlich eine Adressierbarkeit des Endgeräts voraussetzt. Somit können die Chipkartennummern über diesen Weg in die Liste des Pay-TV-Endgeräts übertragen und dort gespeichert werden.

Es ist ferner vorgesehen, daß ein mobiler Datenträger, insbesondere eine Chipkarte sobald sie in kommunikativer Verbindung mit dem Pay-TV-Endgerät steht, Filterinformation an das Pay-TV-Endgerät überträgt. Diese Filterinformationen benötigt das Pay-TV-Endgerät, um die für diese Chipkarte relevanten Empfangsrechte aus dem Strom der gesendeten Empfangsrechte ausfiltern zu können.

Weiterhin ist vorgesehen, daß mittels einer vorgegebenen Priorisierung die Empfangsrechte bei Überschreitung der im Pay-TV-Endgerät zur Verfügung stehenden Liste gelöscht werden. Bei Überschreiten des für eine Chipkarte verfügbaren Speicherplatzes des Pay-TV-Endgerätes muß eine Priorisierungslogik dafür Sorge tragen, daß Empfangsrechte beziehungsweise die Nummern der Chipkarten aus der Liste ausgetragen werden, so daß nur die "wichtigsten" Chipkartennummern und deren Empfangsrechte im Pay-TV-Endgerät gespeichert sind.

Die Erfindung betrifft ferner ein Pay-TV-Endgerät, das mindestens einen Speicher, eine Kommunikationseinrichtung und eine Steuer- und Auswertelektronik aufweist, die es ermöglicht, daß die bestimmten Daten, insbesondere die Empfangsrechte, im Pay-TV-Endgerät gespeichert werden und bei kommunikativer Verbindung über die Kommunikationseinrichtung des Pay-TV-Endgerät mit einem bestimmten mobilen Datenträger, insbesondere mit einer Chipkarte, auf diese weitergeleitet werden.

Eine vorteilhafte Ausgestaltung der Erfindung ergibt sich dadurch, daß der Speicher ein nicht flüchtiger, vorzugsweise ein EEPROM oder ein Flash-PROM-Speicher ist. Durch die Verwendung eines nicht flüchtigen Speicherbausteins ist sichergestellt, daß bei einem Stromausfall das Pay-TV-Endgerät seine gespeicherten Daten nicht verliert.

Ein Steuermodul der Steuer- und Auswertelektronik übernimmt im Pay-TV-Endgerät die Aufgabe, eine Zuordnung zwischen den bestimmten Daten und den bestimmten Datenträgern durchzuführen. Das Steuermodul hat damit die Aufgabe, die bestimmten Daten (Empfangsrechte) den in der Liste des Pay-TV-Endgeräts gespeicherten Nummern der Chipkarten korrekt zuzuordnen, um sie in die Liste abspeichern zu können.

Es ist vorgesehen, daß ein Auswertmodul der Steuer- und Auswertelektronik überprüft, welcher mobile Datenträger in kommunikativer Verbindung mit dem Pay-TV-Endgerät steht, um dadurch eine korrekte Weiterleitung der bestimmten Daten zu ermöglichen. Das Auswertmodul hat damit unter anderem die Aufgabe, zu überprüfen, ob eine Chipkarte in kommunikativer Verbindung mit dem Pay-TV-Endgerät steht. Wenn dies der Fall ist, überprüft das Auswertmodul, ob für diese Chipkarte Empfangsrechte vorliegen, um somit diese Empfangsrechte der Chipkarte zu übermitteln. Falls diese Chipkarte beziehungsweise deren Chipkartennummer in der Liste nicht eingetragen ist, muß das Auswertmodul dafür sorgen, daß dieses erfolgt.

Zusätzlich ist vorgesehen, daß im Pay-TV-Endgerät eine Prioritätsschaltung festlegt, welche bestimmten Daten, insbesondere Empfangsrechte bei einer Überschreitung des verfügbaren Speicherplatzes im Pay-TV-Endgerät gelöscht werden. Die Prioritätsschaltung hat somit die Aufgabe, falls die im Pay-TV-Endgerät gespeicherte Liste vollständig mit Daten gefüllt ist, eine Logik bereitzustellen, die dafür Sorge trägt, daß entweder weitere Chipkarten, die in das Endgerät eingeführt werden, ignoriert werden oder aber gespeicherte Chipkartennummern in der Liste gelöscht werden, so daß "neue" Chipkarten dort eingetragen werden können.

Dieses erfindungsgemäße Verfahren gemäß Anspruch 1 beziehungsweise diese erfindungsgemäße Vorrichtung gemäß Anspruch 9 hat jeweils den Vorteil, daß nun mehrere Kunden mit ihren individuellen Chipkarten auf ein Pay-TV-Endgerät zugreifen können und dadurch stets neue oder weitere Empfangsrechte erhalten und diese auf ihren Chipkarten speichern können.

Die Erfindung wird nun anhand eines Ausführungsbeispiels mit Bezug auf die Zeichnung näher beschrieben. Dabei zeigen:
- Figur 1: ein schematisches Szenario eines Pay-TV-Systems,
- Figur 2: ein Flußdiagramm der Kommunikation zwischen einer Chipkarte und einem Pay-TV-Endgerät,
- Figur 3: ein Flußdiagramm der Kommunikation zwischen einem Pay-TV-Endgerät und einem Übertragungsmedium, und
- Figur 4: ein schematisches Blockschaltbild eines Pay-TV-Endgeräts.

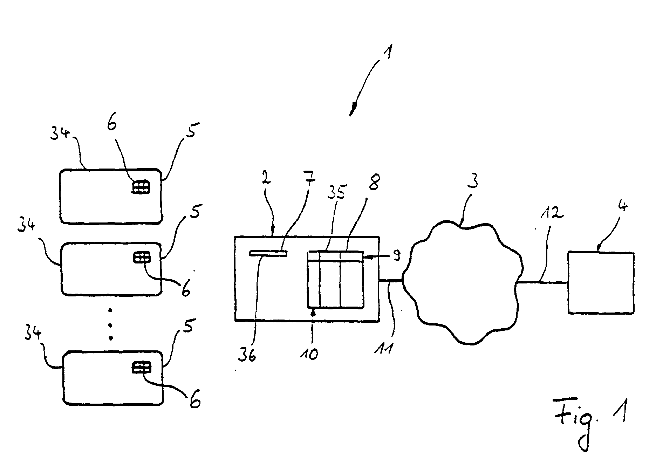

Figur 1 zeigt ein schematisches Szenario eines Pay-TV-Systems 1, welches zum Empfang und zur Dekodierung von verschlüsselten Fernsehprogrammen genutzt wird.

Das Pay-TV-System 1 besteht im wesentlichen aus einem Pay-TV-Endgerät 2, einem Übertragungsmedium 3 und einem Sender 4, wobei jeweils das Pay-TV-Endgerät 2 und der Sender 4 an das Übertragungsmedium 3 angeschlossen sind. Weiterhin zeigt Figur 1 mehrere symbolisch dargestellte mobile Datenträger 34 in Form von Chipkarten 5 mit dessen Kontaktierelementen 6. Das Pay-TV-Endgerät 2 weist eine Kommunikationseinrichtung 36 in Form einer Kontaktiervorrichtung 7 auf, die zur Aufnahme der Chipkarten 5 dient. Weiterhin ist im Pay-TV-Endgerät 2 ein symbolisch dargestellter Speicher 35 in Form einer Liste 8 dargestellt. Die Liste 8 ist symbolisch mit Zeilen 9 und Spalten 10 dargestellt, um zu kennzeichnen, daß in der Liste 8 Daten strukturiert abgelegt werden können. Das Pay-TV-Endgerät 2 ist über eine Verbindungsleitung 11 mit dem Übertragungsmedium 3 verbunden. Ebenso ist der Sender 4 über eine Verbindungsleitung 12 an das Übertragungsmedium 3 angeschlossen.

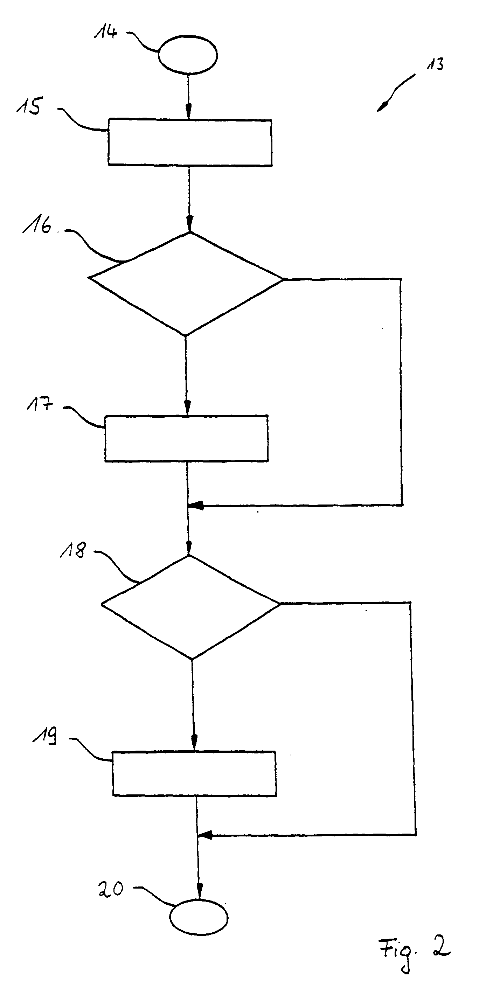

Figur 2 stellt ein erstes stark vereinfachtes Flußdiagramm 13 dar, um die Kommunikation einer Chipkarte 5 und einem Pay-TV-Endgerät 2 im folgenden zu erläutern.

Nach einem Startpunkt 14, der notwendige Software- und/oder Hardwareinitialisierungen durchführt, folgt ein erster Schritt 15. Während des Schrittes 15 wartet das Pay-TV-Endgerät 2 auf eine Chipkarte 5 um mit dieser in kommunikative Verbindung zu treten. Wird eine Chipkarte 5 mit deren Kontaktierelemente 6 in die Kontaktiervorrichtung 7 des Pay-TV-Endgerät 2 eingebracht, so wird zu einem ersten Verzweigungspunkt 16 übergegangen. In diesem ersten Verzweigungspunkt 16 wird nun geprüft, ob die Nummer der Chipkarte in der Liste 8 schon abgespeichert ist oder ob es sich um eine "neue" Chipkarte 5 handelt. Ist eine Chipkarte 5, die noch nicht in der Liste 8 des Pay-TV-Endgerät 2 eingetragen ist eingeführt, so wird zu einem Schritt 17 gewechselt, wobei in diesem Schritt 17 die Filterinformationen und die Nummer der Chipkarte 5 in die Liste 8 des Pay-TV-Endgerät 2 übertragen werden. Falls dieser Schritt schon in der Vergangenheit ausgeführt worden ist, so wird ausgehend vom ersten Verzweigungspunkt 16 dieser Schritt 17 umgangen und zu einem zweiten Verzweigungspunkt 18 verzweigt. Handelt es sich um eine "neue" Chipkarte, so wird ausgehend vom Schritt 17 auch der zweite Verzweigungspunkt 18 erreicht. Im zweiten Verzweigungspunkt 18 wird entschieden, ob für diese Chipkarte 5 besondere Daten, insbesondere Empfangsrechte vorliegen, die zu einem früheren Zeitpunkt oder in diesem Augenblick an das Pay-TV-Endgerät 2 mittels des Senders 4 über das Übertragungsmedium 3 übermittelt wurden. Ist das nicht der Fall, so wird direkt zu einem Endpunkt 20 verzweigt und keine weiteren Schritte ausgeführt. Liegen jedoch Empfangsrechte für diese Chipkarte 5 vor, so wird zu einem Schritt 19 verzweigt. In diesem Schritt 19 werden die in der Liste 8 gespeicherten Empfangsrechte für die eingesteckte Chipkarte 5 an die Letztere übertragen. Somit sind nun die Empfangsrechte für diese Chipkarte 5 durch Zwischenspeicherung in der Liste 8 des Pay-TV-Endgerät 2 an die Chipkarte 5 des Kunden übertragen worden. Nach dem Schritt 19 sind keine weiteren Aktionen auszuführen, so daß direkt in den Endpunkt 20 übergegangen werden kann. In dem Endpunkt 20 können abschließende Tätigkeiten ausgeführt werden, die jedoch für das erfindungsgemäße Verfahren nicht relevant sind und somit nicht näher erläutert werden. Eine notwendige Schleife, ausgehend vom Endpunkt 20, zurück zum Startpunkt 14 ist der Übersichtlichkeit halber nicht dargestellt.

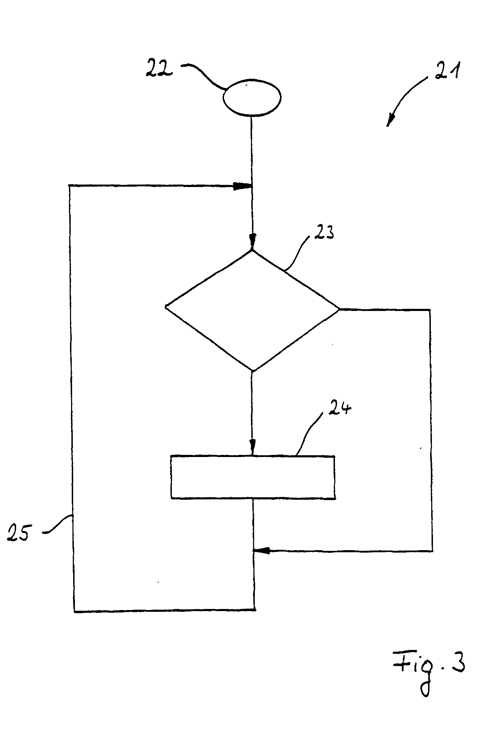

Das zweite Flußdiagramm 21 in Figur 3 stellt stark vereinfacht und abstrahiert die Kommunikation zwischen dem Pay-TV-Endgerät 2 und des Übertragungsmediums 3 dar. Der Ablauf des zweiten Flußdiagramms 21 wird nach Aktivierung des Pay-TV-Endgeräts 2 im Startpunkt 22 gestartet. Im Startpunkt 22 werden, wie im Startpunkt 14 in Figur 2, notwendige hardware- und/oder softwareseitige Initialisierungen durchgeführt. Nachdem der Startpunkt 22 abgearbeitet wurde, wird in einen Verzweigungspunkt 23 übergegangen. Im Verzweigungspunkt 23 wird ständig das Übertragungsmedium 3 "abgehört", so daß ständig ein Vergleich zwischen den gespeicherten Filterinformationen des Pay-TV-Endgeräts 2 und den über das Übertragungsmedium 3 gesendeten Empfangsrechten erfolgt. Stimmen die Filterinformationen mit bestimmten Daten aus den Empfangsrechten überein, so wird in einen Schritt 24 übergegangen. In diesem Schritt 24 werden dann die Empfangsrechte aus einem gesendeten Datenstrom 33 extrahiert und in die zugehörige Zeile 9 der Liste 8 abgespeichert. Stimmen die Filterinformationen nicht mit den bestimmten Daten aus den Empfangsrechten überein, so wird der Schritt 24 auch nicht ausgeführt. Dieser Vergleich zwischen den Filterinformationen und den bestimmten Daten aus den Empfangsrechten wird nun ständig wiederholt, wie dies aus Figur 3 durch die dargestellte Schleife 25 hervorgeht.

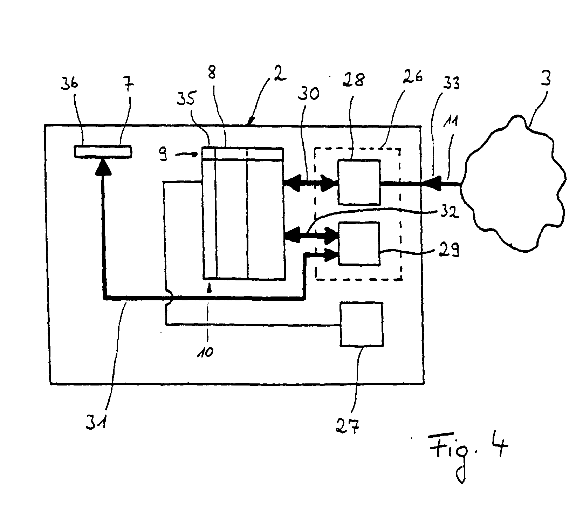

Figur 4 zeigt ein schematisches Blockschaltbild eines Pay-TV-Endgeräts 2 mit der Verbindungsleitung 11 zu dem Übertragungsmedium 3. Das Pay-TV-Endgerät 2 weist die Kontaktiervorrichtung 7 und die Liste 8 auf. Zusätzlich beinhaltet das Pay-TV-Endgerät 2 eine Steuer- und Auswertelektronik 26 und eine Prioritätsschaltung 27. Die Steuer- und Auswertelektronik 26 weist ein Steuermodul 28 und ein Auswertmodul 29 auf. Die für den Empfang der Daten notwendigen relevanten Module und die notwendigen Dekodierungsmodule sind der Übersichtlichkeit halber in der Figur 4 nicht dargestellt. Über die Verbindungsleitung 11 "hört" das Steuermodul 28 die Daten, die über das Übertragungsmedium 3 bereitgestellt werden, ab, so daß der Datenstrom 33 wie in Figur 4 ersichtlich in Richtung des Pay-TV-Endgerät 2 erfolgt. Das Steuermodul 28 setzt das Flußdiagramm 21 welches in Figur 3 erläutert wurde um, so daß wie in Figur 4 dargestellt, eine bidirektionale Verbindungsleitung 30 zwischen dem Steuermodul 28 und der Liste 8 vorhanden sein muß.

Das Auswertmodul 29 stellt über eine Verbindungsleitung 31 eine Kommunikation zu der Kontaktiervorrichtung 7 bereit. Diese Verbindungsleitung 31 muß ebenso bidirektional ausgelegt sein, so daß einerseits Daten in Richtung der Kontaktiervorrichtung 7, und damit in Richtung Chipkarte 5 und andererseits Daten in Richtung Auswertmodul 29 und somit in Richtung der Liste 8 ausgetauscht werden können. Über eine bidirektionale Verbindungsleitung 32 ist sichergestellt, daß einerseits die Filterinformation von der Chipkarte in die Liste 8 übertragen und andererseits die Empfangsrechte über diese Verbindungsleitung 32 auf die Chipkarte 5 übertragen werden können. Das Auswertmodul 29 übernimmt somit die Funktion die in Figur 2 anhand des Flußdiagramms 13 dargestellt ist.

## Patentansprüche

1. Verfahren zur Weiterleitung von bestimmten Daten, einschließlich Empfangsrechten, in einem Pay-TV-Endgerät, die von einem Sender ausgehend über ein Übertragungsmedium dem Pay-TV-Endgerät übertragen werden, unter Verwendung von mobilen Datenträgern, insbesondere von Chipkarten, **dadurch gekennzeichnet, daß** das Pay-TV-Endgerät (2) die bestimmten Daten zwischenspeichert und daß dann, nachdem ein bestimmter mobiler Datenträger (34) in kommunikativer Verbindung mit dem Pay-TV-Endgerät (2) steht, die zu diesem mobilen Datenträger (34) zugehörigen Empfangsrechte auf diesen weitergeleitet und gespeichert werden.

2. Verfahren nach Anspruch 1, **dadurch gekennzeichnet, daß** das Pay-TV-Endgerät (2) mittels einer Liste (8) ein bestimmte Anzahl der Chipkartennummern mitsamt chipkarten-spezifischer Filterinformationen speichert, mit denen es zusammenarbeiten soll.

3. Verfahren nach einem der vorhergehenden Ansprüche, **dadurch gekennzeichnet, daß** die Länge und/oder die genaue Zusammensetzung der Liste (8) variabel oder fest vorgegeben wird.

4. Verfahren nach einem der vorhergehenden Ansprüche, **dadurch gekennzeichnet, daß** die Liste (8) automatisch vom Pay-TV-Endgerät (2) nach festen Regeln generiert wird.

5. Verfahren nach einem der Ansprüche 1 bis 3, **dadurch gekennzeichnet, daß** die Liste (8) manuell eingegeben wird.

6. Verfahren nach einem der Ansprüche 1 bis 3, **dadurch gekennzeichnet, daß** die Liste (8) über das Übertragungsmedium (3) in das Pay-TV-Endgerät (2) übertragen wird.

7. Verfahren nach einem der vorhergehenden Ansprüche, **dadurch gekennzeichnet, daß** der mobiler Datenträger (34), sobald er in kommunikativer Verbindung mit dem Pay-TV-Endgerät (2) steht, Filterinformationen an das Pay-TV-Endgerät (2) überträgt.

8. Verfahren nach einem der vorhergehenden Ansprüche, **dadurch gekennzeichnet, daß** mittels einer vorgegebenen Priorisierung die Empfangsrechte bei einer Überschreitung der im Pay-TV-Endgerät (2) zur Verfügung stehenden Liste (8) gelöscht werden.

9. Vorrichtung zur Dekodierung von Pay-TV-Programmen, im folgenden als Pay-TV-Endgerät bezeichnet, zur Durchführung des Verfahrens nach einem oder mehreren der vorhergehenden Ansprüche, wobei das Pay-TV-Endgerät (2) mindestens einen Speicher (35), der zur Speicherung einer Liste (8) genutzt wird, eine Steuer- und Auswertelektronik (26) und eine Kommunikationseinrichtung (36) zu einem mobilen Datenträger (34), insbesondere zu einer Chipkarte (5), sowie eine Schnittstelle zum mobilen Datenträger (5) aufweist, so daß bestimmte Daten, dem mobilen Datenträger zugeordnete Empfangsrechte einschließend, die von einem Sender (4) ausgehend über ein Übertragungsmedium (3) dem Pay-TV-Endgerät (2) übertragen werden und mittels der Steuer- und Auswertelektronik (26) in dem Speicher (35) als Liste (8) zwischengespeichert werden, und so daß die zwischengespeicherten bestimmten Daten augenblicklich oder zu einem späteren Zeitpunkt auf einen bestimmten, den jeweiligen Empfangsrechten zugehörigen Datenträger (34), der über die Kommunikationseinrichtung (36) und die Schnittstelle mit dem Pay-TV-Endgerät (2) in kommunikativer Verbindung steht, weitergeleitet und dort abgespeichert werden.

10. Vorrichtung nach Anspruch 9, **dadurch gekennzeichnet, daß** der Speicher (35) ein nicht flüchtiger, vorzugsweise ein EEPROM oder ein Flash-PROM-Speicher ist.

11. Vorrichtung nach Anspruch 9 oder 10, **dadurch gekennzeichnet, daß** ein Steuermodul (28) der Steuer- und Auswertelektronik (26) eine Zuordnung zwischen den bestimmten Daten und den bestimmten Datenträgern (34) durchführt.

12. Vorrichtung nach Anspruch 9, 10 oder 11, **dadurch gekennzeichnet, daß** ein Auswertmodul (29) der Steuer- und Auswertelektronik (26) überprüft, welcher mobile Datenträger (34) im kommunikativer Verbindung mit dem Pay-TV-Endgerät (2) steht, um dadurch eine korrekte Weiterleitung der bestimmten Daten zu ermöglichen.

13. Vorrichtung nach einem der Ansprüche 9 bis 12, **dadurch gekennzeichnet, daß** im Pay-TV-Endgerät (2) eine Prioritätsschaltung (27) festlegt, welche bestimmten Daten, insbesondere Empfangsrechte, bei einer Überschreitung des verfügbaren Speicherplatzes gelöscht werden.

## Claims

1. Method for relaying specific data, including receiving rights, in a Pay TV terminal, which are transmitted proceeding from a transmitter via a transmission medium to the Pay TV terminal, using mobile data carriers, in particular smart cards, **characterized in that** the Pay TV terminal (2) buffer-stores the specific data, and **in that**, once a specific mobile data carrier (34) is communicatively connected to the Pay TV terminal (2), the receiving rights associated with this mobile data carrier (34) are then relayed to the latter and stored.

2. Method according to Claim 1, **characterized in that** the Pay TV terminal (2) uses a list (8) to store a specific number of smart card numbers together with smart-card-specific filter information items with which it is intended to cooperate.

3. Method according to one of the preceding claims, **characterized in that** the length and/or the exact composition of the list (8) is variably or fixedly predetermined.

4. Method according to one of the preceding claims, **characterized in that** the list (8) is automatically generated by the Pay TV terminal (2) according to fixed rules.

5. Method according to one of Claims 1 to 3, **characterized in that** the list (8) is input manually.

6. Method according to one of Claims 1 to 3, **characterized in that** the list (8) is transmitted into the Pay TV terminal (2) via the transmission medium (3).

7. Method according to one of the preceding claims, **characterized in that** the mobile data carrier (34), as soon as it is communicatively connected to the Pay TV terminal (2), transmits filter information items to the Pay TV terminal (2).

8. Method according to one of the preceding claims, **characterized in that**, by means of a predetermined prioritization, the receiving rights are deleted when the list (8) available in the Pay TV terminal (2) is exceeded.

9. Apparatus for decoding Pay TV programmes, designated as Pay TV terminal hereinafter, for carrying out the method according to one or more of the preceding claims, in which case the Pay TV terminal (2) has at least one memory (35), which is utilized for storing a list (8), a control and evaluation electronic unit (26) and a communication device (36) to a mobile data carrier (34) in particular to a smart card (5), and also an interface to the mobile data carrier (5), so that specific data, including receiving rights assigned to the mobile data carrier, are transmitted proceeding from a transmitter (4) via a transmission medium (3) to the Pay TV terminal (2) and are buffer-stored as a list (8) in the memory (35) by means of the control and evaluation electronic unit (26), and so that the buffer-stored specific data are relayed at the present time or at a later point in time to a specific data carrier (34), which is associated with the respective receiving rights and is communicatively connected to the Pay TV terminal (2) via the communication device (36) and the interface, and are stored there.

10. Apparatus according to Claim 9, **characterized in that** the memory (35) is a non-volatile memory, preferably an EEPROM or a flash-PROM memory.

11. Apparatus according to Claim 9 or 10, **characterized in that** a control module (28) of the control and evaluation electronic unit (26) carries out an assignment between the specific data and the specific data carriers (34).

12. Apparatus according to Claim 9, 10 or 11, **characterized in that** an evaluation module (29) of the control and evaluation electronic unit (26) checks which mobile data carrier (34) is communicatively connected to the Pay TV terminal (2) in order thereby to enable correct relaying of the specific data.

13. Apparatus according to one of Claims 9 to 12, **characterized in that**, in the Pay TV terminal (2), a priority circuit (27) stipulates which specific data, in particular receiving rights, are deleted when the available memory space is exceeded.

## Revendications

1. Procédé de transmission de données particulières y compris des droits de réception vers un terminal de télévision payante, ces données étant transmises par un émetteur et un support de transmission au terminal de télévision payante en utilisant des supports mobiles de données, notamment des cartes à puce,
**caractérisé en ce que**
le terminal de télévision payante (2) enregistre de façon intermédiaire certaines données et
après qu'un certain support de données mobile (34) soit mis en communication avec le terminal de télévision payante (2), les droits de réception attribués à ce support de données mobile (34) sont transmis et enregistrés.

2. Procédé selon la revendication 1,
**caractérisé en ce que**
le terminal de télévision payante (2) contient en mémoire au moyen d'une liste (8) un nombre déterminé de numéros de cartes à puce ainsi que des informations de filtre spécifiques aux cartes à puce avec lesquelles il doit coopérer.

3. Procédé selon l'une quelconque des revendications précédentes,
**caractérisé en ce que**
la longueur et/ou la composition précise de la liste (8) est prédéterminée de manière variable ou fixe.

4. Procédé selon l'une quelconque des revendications précédentes,
**caractérisé en ce que**
la liste (8) est générée automatiquement par le terminal de télévision payante (2) selon des règles fixes.

5. Procédé selon l'une quelconque des revendications 1 à 3,
**caractérisé en ce que**
la liste (8) est introduite manuellement.

6. Procédé selon l'une quelconque des revendications 1 à 3,
**caractérisé en ce que**
la liste (8) est transmise par le support de transmission (3) dans le terminal de télévision payante (2).

7. Procédé selon l'une quelconque des revendications précédentes,
**caractérisé en ce que**
le support mobile de données (34) transmet des informations de filtre au terminal de télévision payante (2) dès qu'il est en liaison de communication avec le terminal de télévision payante (2).

8. Procédé selon l'une quelconque des revendications précédentes,
**caractérisé en ce qu'**
à l'aide d'une mise en priorité prédéterminée, les droits de réception de la liste disponible (8) dans le terminal de télévision payante (2) sont effacés en cas de dépassement.

9. Dispositif de décodage de programme de télévision payante appelé ci-après terminal de télévision payante pour la mise en oeuvre du procédé selon l'une quelconque des revendications précédentes,
selon lequel
le terminal de télévision payante (2) comporte au moins une mémoire (35) pour mémoriser une liste (8), une électronique de commande et de traitement (26) et une installation de communication (36) vers un support de données mobile (34), notamment une carte à puce (5) ainsi qu'une interface vers le support de données mobile (5) pour transmettre des données particulières comprenant des droits de réception attribués au support de données mobiles, provenant d'un émetteur (4) par un support de transmission (3) pour être transmises au terminal de télévision payante (2) et être enregistrées de façon intermédiaire à l'aide de l'électronique de commande et de traitement (26) dans la mémoire (35) sous la forme d'une liste (8) et pour qu'ainsi les données particulières, mémorisées de façon intermédiaire, soient transmises instantanément ou ultérieurement à un support de données, déterminé (34), parmi ceux autorisés à recevoir, ce support de données étant relié en communication par l'installation de communication (36) et l'interface avec le terminal de télévision payante (2), pour que les données puissent y être mémorisées.

10. Dispositif selon la revendication 9,
**caractérisé en ce que**
la mémoire (35) est une mémoire non volatile, de préférence une mémoire EEPROM ou une mémoire flash PROM.

11. Dispositif selon l'une quelconque des revendications 9 ou 10,
**caractérisé en qu'**
un module de commande (28) de l'électronique de commande et de traitement (26) effectue une association entre les données particulières et les supports de données (34) déterminés.

12. Dispositif selon les revendications 9, 10, 11,
**caractérisé en qu'**
un module de traitement (29) de l'électronique de commande et de traitement (26) vérifie quel support de données mobile (34) est en communication avec le terminal de télévision payante (2) pour permettre une transmission correcte des données particulières.

13. Dispositif selon l'une quelconque des revendications 9 à 12,
**caractérisé en ce qu'**
un circuit de priorité (27) est prévu dans le terminal de télévision payante (2) qui efface des données particulières, notamment des droits de réception lors du dépassement de l'emplacement de mémoire disponible.
